# EUROPÄISCHE PATENTSCHRIFT

(11) **EP 0 509 326 B1**
(45) Veröffentlichungstag und Bekanntmachung des Hinweises auf die Patenterteilung: **02.07.1997**
(21) Anmeldenummer: 92105675.0
(22) Anmeldetag: 02.04.1992
(51) Int. Cl.: B60J 7/12

(54) **Klapp- bzw. Faltverdeck für Fahrzeuge wie Cabriolets od.dgl.**
Soft top for convertible or similar vehicles
Toit pliant pour véhicules cabriolets et similaires

(30) Priorität: 15.04.1991 DE 4112256
(43) Veröffentlichungstag der Anmeldung: 21.10.1992
(73) Patentinhaber: PARAT-WERK SCHÖNENBACH GmbH + Co KG, D-42897 Remscheid (DE)
(72) Erfinder: Müller, Hubert, W-8391 Neureichenau (DE); Kasparak, Manfred, W-8391 Neureichenau (DE)
(74) Vertreter: Patentanwälte Ostriga & Sonnet

(56) Entgegenhaltungen:
- FR-A- 674 015
- FR-A- 870 098
- US-A- 1 778 356
- US-A- 2 785 003
- US-A- 3 486 788
- US-A- 4 626 021

## Beschreibung

Die Erfindung bezieht sich auf ein Klapp- bzw. Faltverdeck für Fahrzeuge wie Cabriolets od. dgl. mit einem an Profilen wie Spriegeln, Spannbügeln, Haltewinkein od. dgl. eines tragenden Verdeckgestells unter Vermittlung von Befestigungsprofilen befestigten Verdeckstoff.

Es ist üblich, den Verdeckstoff an den Stellen der gewünschten festen Verbindung mit den Profilen des Verdeckgestells zu verkleben. Die dazu benötigten lösungsmittelhaltigen Klebstoffe sind jedoch umwelt- und gesundheitsschädigend, weshalb ihre Verwendung problematisch ist. Weiterhin sind die Montagekosten beim Konfektionieren eines Verdeckbezuges beträchtlich, da der Klebstoff zur Aushärtung besondere Behandlung und eine gewisse Zeitspanne benötigt. Zusätzliche Nachteile ergeben sich beim Auswechseln oder Ausbessern eines Verdeckbezuges, denn die Demontage des alten Verdeckbezuges ist umständlich und schwierig. Das Verdeckgestell muß zunächst von den alten Klebstoffresten befreit werden, bevor ein neuer Verdeckbezug mit den eingangs geschilderten Nachteilen auf das Gestell aufgezogen werden kann.

Der Erfindung liegt folglich die Aufgabe zugrunde, ein Klapp- bzw. Faltverdeck der im Oberbegriff des Patentanspruches 1 genannten Art in geschickter Weise so zu gestalten, daß eine sämtliche bisherigen Nachteile ausschaltende klebstofffreie Verbindung des Verdeckstoffs mit dem Verdeckgestell ermöglicht wird.

Eine allen Anforderungen entsprechende Lösung dieses Problems besteht entsprechend der Erfindung darin, daß unmittelbar an die Randkanten der an den Verdeckgestell-Profilen zu befestigenden Verdeckstoffpartien Formleisten angenäht sind, die sich im wesentlichen ausschließlich unterhalb der Verdeckgestell-Profile sowie - formlich an diese angepaßt - in deren Längsrichtung erstrecken und daß diese Formleisten mittels jeweils eines Befestigungsprofils an den Verdeckgestell-Profilen angeschraubt sind.

Bei der Konfektionierung des Verdeckstoffes werden die benötigten Formleisten an die Verdeckstoffkanten angenäht. Danach kann der Verdeckstoff mit den Teilen des Verdeckgestells, an denen er zu befestigen ist, durch lediglich einige Schrauben verbunden werden. Diese Arbeit ist rasch und einfach durchzuführen. Schwierigkeiten beim Auswechseln eines Verdeckstoffes sind ebenso völlig vermieden, da hierzu lediglich der alte Verdeckbezug vom Gestell abgeschraubt und ein neuer angeschraubt wird. Außerdem ist die Zuordnung der Formleisten einerseits zum Verdeckstoff, andererseits zu den Profilen in geschickter Weise so getroffen, daß keine oder keine nennenswerten Verdeckstoffabschnitte mehr über die Profile vorstehen. Dies ist vor allem auch deshalb wichtig, weil der Fahrtwind so keine Angriffsflächen wie sonst an weit überstehenden und deshalb zum Flattern neigenden Verdeckstoffabschnitten finden kann.

Zum Stand der Technik wird auf das Dokument US-A-4 616 021 (D1) hingewiesen. Dieses Dokument zeigt in Fig. 6 ein mit 62 bezeichnetes "header trim panel", welches im weitesten Sinne als Befestigungsprofil angesehen werden kann und welches zwischen sich und einem mit 22 bezeichneten "front header member" (der vergleichbar ist mit dem Spriegel des Anmeldungsgegenstandes) den freien, unbehandelten Verdeckstoffrand faßt. Eine Formleiste, die entsprechend dem Gegenstand der Anmeldung am Verdeckstoffrand angebracht ist, gibt es hier nicht. Im übrigen lassen sowohl die Fig. 6 des Dokuments US-A-4 616 021 (D1) als auch der zugehörige Text völlig offen, wie die Befestigung des Verdeckstoffrandes tatsächlich hier erfolgt. Auch eine Verklebung ist nicht ausgeschlossen.

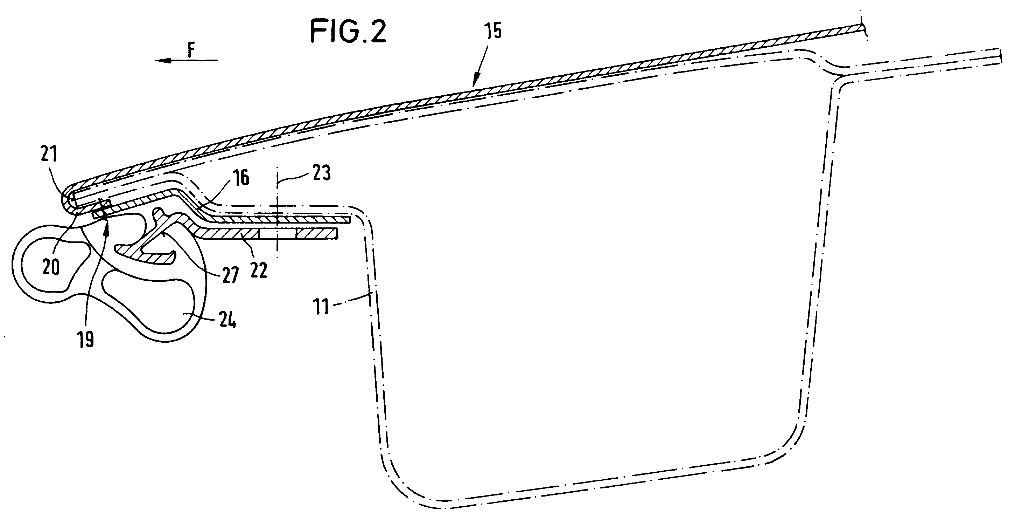

Eine genauere Schilderung einer Verdeckstoff-Befestigung ist unter Bezugnahme auf Fig. 2 in D1 im Bereich des zwei Verdeckstoffpartien 34 und 36 nahtlos miteinander verbindenden Bügels 28 gegeben. Dort werden die einander überlappenden Endbereiche der Verdeckstoff-Partien 34 und 36 zwischen zwei Leisten 42 und 44 eingespannt, wobei die Leiste 42 mittels Schrauben 48 mit der Leiste 44 verbunden wird. Diese Verbindung ist allein offensichtlich so ungenügend und kann bei Belastung, z.B. durch aufblähenden Winddruck, zum Zerreißen der Verdeckstoffränder führen, daß in Sp. 3, Zeilen 54 bis 58 von D1 ausdrücklich erwähnt ist, daß die Konstellation nach Fig. 2 durch zahlreiche Schichten von Klebstoff gesichert sein sollte. Auch der Konstruktion nach Fig. 2 fehlt also gerade die für die Erfindung sehr wesentlichen Merkmale, daß unmittelbar an die Randkanten der an den Profilen zu befestigenden Verdeckstoffpartien Formleisten angenäht sind und daß diese Formleisten mittels Befestigungsprofilen an den Verdeckgestellprofilen angebracht sind.

Im Zusammenhang mit der Verhinderung des Halterns unter Fahrtwind ist eine Ausgestaltung von Vorteil, die dadurch gekennzeichnet ist, daß der Rand des Verdeckstoffs um die Kante der Profile herumgeführt und unter ihr überlappend mit der Formleiste vernäht ist. Eine solche Anordnung empfiehlt sich vorzugsweise zur Befestigung der gegen den Fahrtwind ausgerichteten Verdeckstoffkanten, also beispielsweise für den am Windlaufspriegel oberhalb des horizontalen Frontscheibenrahmens angebrachten Verdeckstoffrand.

Eine alternative Randgestaltung, bei der die Randkante des Verdeckstoffes etwa um Nahtbreite vor die Kante der Profile geführt und dort unter Einschluß eines die aufeinanderliegenden Kanten von Verdeckstoff und Formleiste umhüllenden Einfaßbandes mit der Formleiste vernäht ist, wird man für die heckseitige, insbesondere einem Spannbügel zugeordnete Verdeckstoffkante heranziehen, sowie für seitliche Partien, bei denen mittels des Einfaßbandes auch ein eine Regenrinne bildender Keder mit an den Verdeckstoff und die Formleiste angenäht werden kann.

Die Formleisten bestehen vorzugsweise aus einem biegsamen Kunststoff, insbesondere einem PE-Kunststoff, so daß sie sich dem Verlauf der Profile, an die sie angeschlossen sind, anschmiegen können.

Schließlich besteht ein weiteres vorteilhaftes Merkmal der Erfindung darin, daß dem Befestigungsprofil - als Schiene ausgebildet - eine rinnen- und/oder leistenförmige Aufnahme zum Ein- oder Überschieben eines strangförmigen Dichtungsprofiles angeformt ist. Auf diese Weise hat ein einstückiges Befestigungsprofil einerseits die Aufgabe, die an die Verdeckstoffkanten angeschlossenen Formleisten zwischen sich und dem zugehörigen Profilteil unter Vermittlung der Befestigungsschrauben einzuspannen sowie andererseits der unmittelbaren Halterung eines Dichtungsprofils zu dienen, welches auf diese Art und Weise auch der Verdeckstoffkante nah benachbart angeordnet werden kann.

Im übrigen versteht sich die Erfindung am besten aus der nachfolgenden Beschreibung eines in den Zeichnungen dargestellten Ausführungsbeispiels. In den Zeichnungen zeigen:
- Fig. 1: eine schematische Seitenansicht eines Cabriolet-Verdeckgestells,
- Fig. 2: einen schematischen Längsschnitt durch die Verdeckstoffbefestigung im Bereich des vorderen Windlaufspriegels (II in Fig. 1) eines Verdeckgestells,
- Fig. 3: eine der Fig. 2 entsprechende Darstellung im Bereich des hinteren Verdeckgestell-Spannbügels (III in Fig. 1) sowie
- Fig. 4: eine entsprechende Darstellung im Bereich eines seitlichen Haltewinkels etwa entsprechend der Schnittangabe IV-IV in Fig. 1.

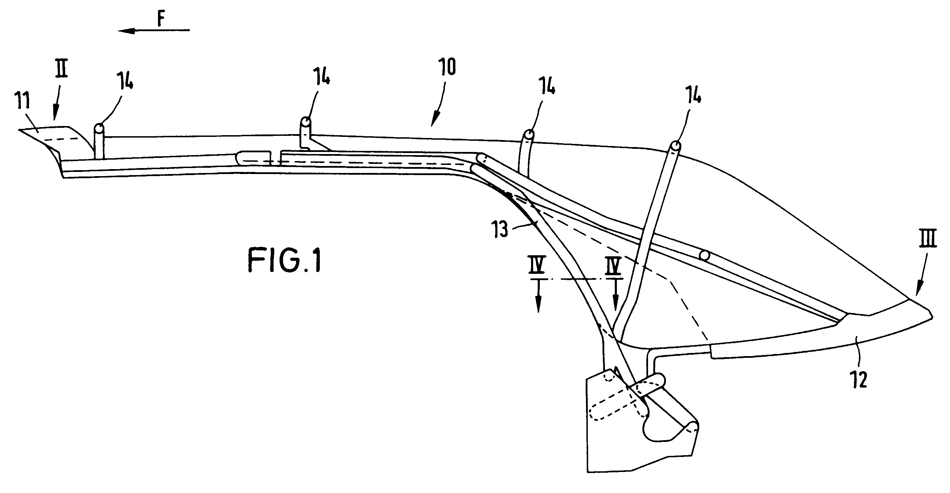

Fig. 1 zeigt die im Rahmen der Erfindung wesentlichen Teile eines Verdeckgestells 10 für ein Klapp- bzw. Faltverdeck für Cabriolets. In Fahrtrichtung F vorn überspannt ein sogenannter Windlaufspriegel 11 das Verdeckgestell quer zur Fahrtrichtung und liegt bei geschlossenem Verdeck auf dem oberen Querholm des Windschutzscheibenrahmens. An der hinteren Seite des Verdeckgestells 10 befindet sich ein weiteres, etwa U-förmig verlaufendes Profil, der sogenannte Spannbügel 12. An den beiden Fahrzeugseiten erstreckt sich etwa entlang dem hinteren Rand einer Seitenscheibe, ein sogenannter Haltewinkel 13.

Der über das Verdeckgestell 10 gespannte und von weiteren Spriegeln 14 unterstützte, in Fig. 1 nicht dargestellte Verdeckbezug (15 in den übrigen Figuren), muß mit den erwähnten Profilen, also mit dem Windlaufspriegel 11, dem Spannbügel 12 und den beiden seitlichen Haltewinkeln 13 befestigt werden. Diese Befestigung geschieht bislang dadurch, daß der Verdeckstoff mit seiner Innenfläche an diese Profilteile angeklebt wird.

Erfindungsgemäß wird der in den Fig. 2 bis 4 mit 15 bezeichnete Verdeckbezug mit Hilfe von Formleisten 16, 17 und 18 aus Kunststoff mit den entsprechenden Profilteilen verschraubt. Dabei ist jede Formleiste 16, 17 und 18 im Bereich einer Naht 19 an den Verdeckbezug 15 angenäht.

Bei der Befestigung des Verdeckbezugs 15 entsprechend Fig. 2 im Bereich des vorderen Windlaufspriegels 11 ist die vordere Randkante 20 des Verdeckstoffes 15 um die Vorderkante 21 des Windlaufspriegels 11 herumgezogen und unter dem Windlaufspriegel-Profil - wie ersichtlich - überlappend mit der vorderen Längskante der Formleiste 16 vernäht. Die Formleiste 16 ist sowohl in ihrer Längsrichtung als auch in ihrem in Fig. 2 sichtbaren Querschnittsprofil dem Verlauf des hier als Anlage für sie dienenden Abschnitts des Windlaufspriegels 11 angepaßt. Die endgültige Befestigung geschieht mittels einer Befestigungsschiene 22 und nicht dargestellter Schrauben, deren Schraubachse mit 23 bezeichnet ist. Die Formleiste 16 ist also mittels der Schraubverbindung zwischen der Befestigungsschiene 22 und dem Windlaufspriegel fest eingespannt. Die in Fahrtrichtung F weisende Vorderkante der Befestigungsschiene 22 ist erkennbar profiliert zum Auf- bzw. Einschieben eines strangförmigen Dichtungsprofiles 24, das bei geschlossenem Verdeck dichtend auf dem oberen Querholm des Windschutzscheibenrahmens aufliegt.

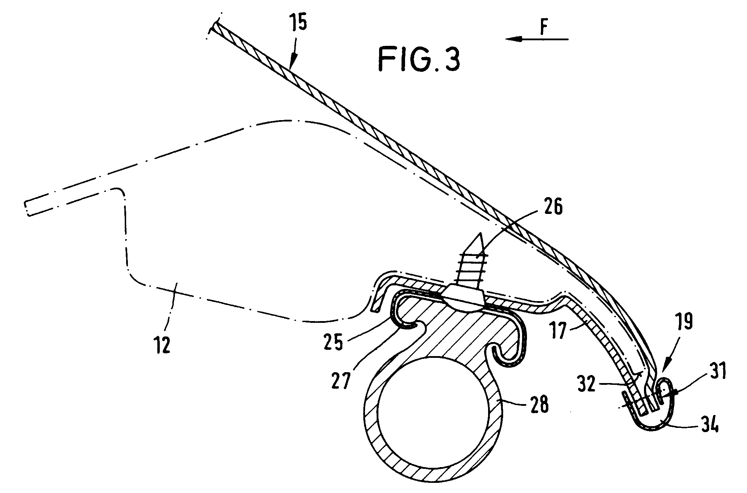

Das Formteil 17 am fahrzeughinteren Spannbügel 12 (Fig. 3) wird ebenfalls mit Hilfe einer Befestigungsschiene 25 und Schrauben 26 mit dem Spannbügel 12 verbunden. Die Befestigungsschiene 25 besteht hier aus einem Blechprofil, während es sich bei der in Fig. 2 dargestellten Befestigungsschiene 22 um ein Strangpreßprofil handelt. Aber auch die Profilschiene 25 bildet einen hinterschnittenen Aufnahmeraum 27 für ein strangförmiges Dichtungsprofil 28 aus. Dieses liegt im geschlossenen Zustand des Verdecks auf dem hinter dem Fahrgastraum umlaufenden Karosserieabschnitt auf.

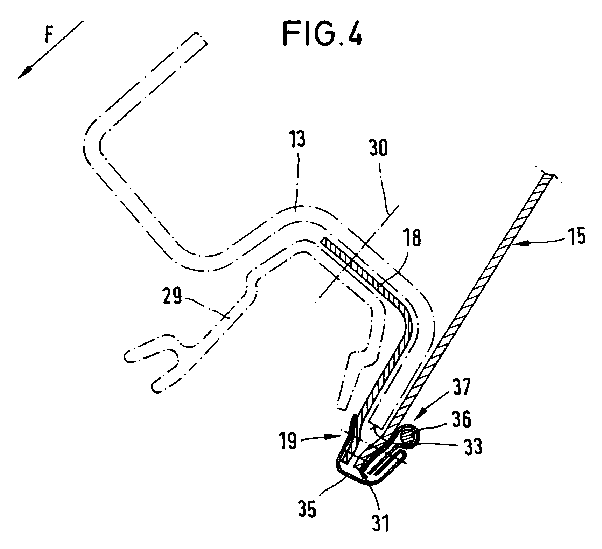

An den beiden Fahrzeugseiten schließlich ist die Formleiste 18 mittels einer Befestigungsschiene 29 mit dem Haltewinkel 13 verschraubt, was die Schraubachse 30 andeutet. Sowohl hier als auch im Bereich des Spannbügels 12 entsprechend Fig. 3 sind die Randkanten 31 des Verdeckstoffs 15 etwa um Nahtbreite vor die Kanten 32 bzw. 33 des Spannbügels 12 bzw. des Haltewinkels 13 geführt und dort Kante-an-Kante mit der jeweiligen Formleiste 17 bzw. 18 vernäht. Ein Einfaßband 34 (Fig. 3) bzw. 35 (Fig. 4) umschließt den Nahtbereich. Bei der seitlichen Verdeckbefestigung an den Haltewinkeln 13 entsprechend Fig. 4 schließt das Einfaßband 35 im übrigen noch ein Kederband 36 zur Ausbildung einer Regenrinne 37 ein.

## Patentansprüche

1. Klapp- bzw. Faltverdeck für Fahrzeuge wie Cabriolets od. dgl. mit einem an Profilen wie Spriegeln, Spannbügeln, Haltewinkeln od. dgl. eines tragenden Verdeckgestells unter Vermittlung von Befestigungsprofilen befestigten Verdeckstoff, dadurch gekennzeichnet, daß unmittelbar an die Randkanten (20, 31) der an den Verdeckgesell-Profilen zu befestigenden Verdeckstoffpartien Formleisten (16, 17, 18) angenäht sind, die sich im wesentlichen ausschließlich unterhalb der Verdeckgestell-Profile (11, 12, 13) sowie - formlich an diese angepaßt - in deren Längsrichtung erstrecken, und daß diese Formleisten (16, 17, 18) mittels jeweils eines Befestigungsprofils (22, 25, 29) an den Verdeckgestell-Profilen (11, 12, 13) angeschraubt sind.

2. Verdeck nach Anspruch 1, dadurch gekennzeichnet, daß die Formleiste (16) sowohl in ihrer Längsrichtung als auch in ihrem Querschnittsprofil dem Verlauf des als Anlage für sie dienenden Abschnitts des Windlaufspriegels (11) angepaßt ist.

3. Verdeck nach Anspruch 1, dadurch gekennzeichnet, daß die Randkante (20) des Verdeckstoffs (15) um die Kante (21) der Profile (11) herumgeführt und unter ihr überlappend mit der Formleiste (16) vernäht ist.

4. Verdeck nach Anspruch 1, dadurch gekennzeichnet, daß die Randkante (31) des Verdeckstoffs (15) etwa um Nahtbreite vor die Kante (31; 32) des Profils (12; 13) geführt und dort unter Einschluß eines die aufeinanderliegenden Kanten von Verdeckstoff (15) und Formleiste (17; 18) umhüllenden Einfaßbandes (34; 35) mit der Formleiste (17; 18) vernäht ist.

5. Verdeck nach Anspruch 1 oder einem der folgenden, dadurch gekennzeichnet, daß die Formleisten (16; 17; 18) aus biegsamem Kunststoff, insbesondere einem PE-Kunststoff, bestehen.

6. Verdeck nach Anspruch 1 oder einem der folgenden, dadurch gekennzeichnet, daß dem Befestigungsprofil (22, 25, 29) - als Schiene ausgebildet - eine rinnen- und/oder leistenförmige Aufnahme (27) zum Ein- und/oder Überschieben eines strangförmigen Dichtungsprofils (24, 28) angeformt ist.

## Claims

1. Folding or collapsible hood for vehicles such as convertibles or the like, with a hood material which is fastened, through the agency of fastening profiles, to the profiles, such as hoops, stretching bows, holding angles or the like, of a supporting hood frame, characterised in that there are sewn directly onto the marginal edges (20, 31) of those parts of the hood material which are to be fastened to the hood frame profiles, moulded strips (16, 17, 18) which essentially extend exclusively underneath the hood frame profiles (11, 12, 13) and also - being adapted to the latter in shape - in the longitudinal direction thereof, and that the said moulded strips (16, 17, 18) are screwed onto the hood frame profiles (11, 12, 13) by means of a fastening profile (22, 25, 29) in each case.

2. Hood according to claim 1, characterised in that the moulded strip (16) is adapted, both in its longitudinal direction and also in its cross-sectional profile, to the shape of that section of the apron hoop (11) which serves as an abutment for it.

3. Hood according to claim 1, characterised in that the marginal edge (20) of the hood material (15) is guided round the edge (21) of the profiles (11) and, overlapping under the latter, is sewn up with the moulded strip (16).

4. Hood according to claim 1, characterised in that the marginal edge (31) of the hood material (15) is guided in front, by approximately the width of a seam, of the edge (31; 32) of the profile (12; 13) and is sewn up with the moulded strip (17; 18) at that point with the inclusion of an edging strip (34; 35) enveloping the superimposed edges of the hood material (15) and moulded strip (17; 18).

5. Hood according to claim 1 or one of the subsequent claims, characterised in that the moulded strips (16; 17; 18) consist of flexible plastic, in particular a PE plastic.

6. Hood according to claim 1 or one of the subsequent claims, characterised in that there is moulded onto the fastening profile (22, 25, 29) - which is constructed as a rail - a gutter-shaped and/or strip-shaped holder (27) for the pushing-in and/or pushing-on of a strand-shaped sealing profile (24, 28).

## Revendications

1. Toit ouvrant ou pliant, respectivement, pour des véhicules comme des cabriolets ou similaires, comprenant une capote qui est fixée par l'intermédiaire de profilés de fixation à des profilés comme des arceaux, des étriers de serrage, des cornières de retenue ou similaires d'une armature porteuse du toit, caractérisé par le fait que des baguettes profilées (16, 17, 18) sont cousues directement sur les bords (20, 31) des parties de la capote qui doivent être fixées aux profilés de l'armature du toit, et qu'elles s'étendent pour l'essentiel exclusivement au-dessous des profilés de l'armature du toit (11, 12, 13) et dans la direction longitudinale de ceux-ci - en leur étant adaptées quant à leur forme -, et par le fait que ces baguettes profilées (16, 17, 18) sont vissées aux profilés de l'armature du toit (11, 12, 13) au moyen d'un profilé de fixation (22, 25, 29) à chaque fois.

2. Toit selon la revendication 1, caractérisé par le fait que la baguette profilée (16) épouse le tracé de la partie de l'arceau d'auvent (11) qui lui sert d'appui, tant dans sa direction longitudinale que par son profil en section transversale.

3. Toit selon la revendication 1, caractérisé par le fait que le bord (20) de la capote (15) est rabattu autour du bord (21) des profilés (11), et qu'il est cousu à la baguette profilée (16) qui est située au-dessous de lui avec un recouvrement.

4. Toit selon la revendication 1, caractérisé par le fait que le bord (31) de la capote (15) s'étend en avant du bord (32 ; 33) du profilé (12 ; 13) à une distance à peu près égale à la largeur de la couture, et qu'il est cousu à cet endroit à la baguette profilée (17 ; 18) en comprenant une bande à bords rabattus (34 ; 35) qui entoure les bords superposés de la capote (15) et de la baguette profilée (17 ; 18).

5. Toit selon la revendication 1 ou l'une des suivantes, caractérisé par le fait que les baguettes profilées (16 ; 17 ; 18) sont constituées par une matière plastique flexible, et en particulier par une matière plastique à base de polyéthylène.

6. Toit selon la revendication 1 ou l'une des suivantes, caractérisé par le fait qu'en vue de l'introduction et/ou du chevauchement d'un profilé d'étanchéité extrudé (24, 28), un logement (27) en forme de rainure et/ou de baguette est ménagé sur le profilé de fixation (22, 25, 29) qui est réalisé sous la forme d'un rail.
